# EUROPEAN PATENT SPECIFICATION

(11) **EP 3 088 454 B1**
(45) Date of publication and mention of the grant of the patent: **30.08.2023**
(21) Application number: 14875628.1
(22) Date of filing: 16.12.2014
(51) Int. Cl.: C08J 9/00, C08J 9/12, C08J 9/16, C08J 9/18, C08J 9/232

(54) **POLYOLEFIN RESIN FOAM PARTICLES, AND POLYOLEFIN RESIN IN-MOLD EXPANSION MOLDED ARTICLE**
POLYOLEFINHARZSCHAUMTEILCHEN UND EXPANSIONSGEFORMTER GEGENSTAND AUS POLYOLEFINHARZ
PARTICULES DE MOUSSE DE RÉSINE DE POLYOLÉFINE, ET ARTICLE MOULÉ EXPANSÉ DANS LE MOULE DE RÉSINE DE POLYOLÉFINE

(30) Priority: 27.12.2013 JP 2013270943
(43) Date of publication of application: 02.11.2016
(73) Proprietor: Kaneka Corporation, Osaka-shi, Osaka 530-8288 (JP)
(72) Inventor: YOSHIDA Toru, Settsu-shi, Osaka 566-0072 (JP); FUKUZAWA Jun, Settsu-shi, Osaka 566-0072 (JP)
(74) Representative: Vossius & Partner Patentanwälte Rechtsanwälte mbB
(86) International application number: PCT/JP2014/083241
(87) International publication number: WO 2015/098619

(56) References cited:
- JP-A- 2000 063 556
- JP-A- 2006 509 051
- JP-A- 2009 167 236
- JP-A- 2010 209 145
- JP-A- 2013 100 555
- JP-A- 2013 181 157
- US-A1- 2013 231 409

## Description

### Technical Field

The present invention relates to polyolefin resin foam particles and a polyolefin resin in-mold expansion molded article including the polyolefin resin foam particles.

### Background Art

Polyolefin resin in-mold expansion molded articles prepared by using polyolefin resin foam particles including a polyolefin resin have advantageous characteristics of in-mold expansion molded articles, such as optional shapes, lightweight properties, and heat-insulating properties. The polyolefin resin in-mold expansion molded articles are superior in chemical resistance, heat resistance, strain recovery characteristics after compression, and other characteristics to in-mold expansion molded articles produced from polystyrene resin foam particles. These advantageous characteristics allow the polyolefin resin in-mold expansion molded articles to be used for automobile interior members, core materials for automobile bumpers, and various applications such as heat insulating materials, shock absorbing packing materials, and returnable boxes.

Polyolefin resins are also generally used for films, fibers, and injection molded articles, for example. Although such a general-purpose resin is inexpensive and thus is desired to be used for foam particles, the polyolefin resin for foam particles greatly differs from the polyolefin resin for fibers or injection molded articles in properties such as melting property. It is thus difficult to use the polyolefin resin for fibers or injection molded articles as the polyolefin resin for foam particles.

In contrast, the polyolefin resin for films has comparatively similar properties such as melting properties to those of the polyolefin resin for foam particles. However, commercially available polyolefin resins for films typically contain an antiblocking agent for films, such as silica and talc. If a polyolefin resin for films containing such an inorganic antiblocking agent is used to prepare foam particles, the resulting foam particles have markedly small cell diameters. As a result, the moldability of an in-mold expansion molded article produced from the foam particles deteriorates, and the produced in-mold expansion molded article has a poor surface appearance. Specifically, the surface of the in-mold expansion molded article is likely to have an unevenness (the phenomenon of generating recesses among foam particles) and wrinkles; or an edge portion (a ridge line portion) at which a face intersects with another face of an in-mold expansion molded article has poor mold transferability to result in a non-smooth edge portion and marked unevenness of the foam particles, for example. In some cases, an in-mold expansion molded article is shrunk, resulting in poor dimensional accuracy.

To prevent such problems, the amount of the inorganic antiblocking agent is reduced or no inorganic antiblocking agent is added. Such a polyolefin resin is, however, difficult to be used for films, is not a general-purpose article, and thus becomes expensive (for example, Patent Document 1). Although a method of removing the antiblocking agent from a general-purpose article to which the antiblocking agent is added can be used, this case also increases the cost, and the advantages of using a general-purpose article is greatly reduced. In such a circumstance, there is a demand for a technique of suppressing the reduction of cell diameters while a general purpose polyolefin resin containing the inorganic antiblocking agent is used.

As the method of suppressing the reduction of cell diameters, a method of adding, for example, an ester of a higher fatty acid and a polyhydric alcohol is known (for example, Patent Document 2). Another technique of intentionally adding silica, talc, or the like, which is known as the inorganic antiblocking agent for polyolefin resins for films, to a polyolefin resin for foam particles is also known. By the technique, the cell diameters of the resulting polyolefin resin foam particles are appropriately reduced and the cell diameters are equalized (for example, Patent Documents 3 to 6). Patent Document 7 discloses polyolefin foamed particles having an antiblocking agent content and a particle diameter being in the range herein claimed. The particles however comprise only one inorganic antiblocking agent.

### Citation List

### Patent Literature

Patent Document 1: JP-A No. S58-210933
Patent Document 2: JP-A No. H08-113667
Patent Document 3: JP-A No. 2010-248341
Patent Document 4: JP-A No. S59-207942
Patent Document 5: International Publication WO 2008/139822
Patent Document 6: JP-A No. 2009-114359
Patent Document 7 : US 2013/231409

### Summary of Invention

### Technical Problem

The present invention has an object to produce polyolefin resin foam particles that are prepared from such a polyolefin resin containing an inorganic antiblocking agent as polyolefin resins for films but have large cell diameters and to produce a polyolefin resin in-mold expansion molded article including the polyolefin resin foam particles and having an excellent surface appearance.

### Solution to Problem

The inventors of the present invention have intensively studied in order to solve the problems, consequently have found that by using two or more inorganic antiblocking agents in combination, the resulting polyolefin resin foam particles surprisingly have larger cell diameters, and have completed the present invention.

In other words, the present invention relates to polyolefin resin foam particles prepared by foaming polyolefin resin particles including a polyolefin resin composition, the polyolefin resin composition containing two or more inorganic antiblocking agents in a total amount of 0.1 parts by weight or more and 2 parts by weight or less relative to 100 parts by weight of a polyolefin resin, and the polyolefin resin foam particles have an average cell diameter of 100 µm or more and 400 µm or less.

The invention also relates to a method for producing polyolefin resin foam particles having an average cell diameter of 100 µm or more and 400 µm or less, the method includes placing polyolefin resin particles in a pressure-resistant container together with water and an inorganic foaming agent, the polyolefin resin particles including a polyolefin resin composition, the polyolefin resin composition containing two or more inorganic antiblocking agents in a total amount of
0.1 parts by weight or more and 2 parts by weight or less relative to 100 parts by weight of a polyolefin resin, dispersing the mixture in a stirring condition and concurrently increasing a temperature and a pressure in the container, and then discharging the dispersion liquid in the pressure-resistant container into a region having a pressure lower than the internal pressure of the pressure-resistant container, thereby foaming the polyolefin resin particles.

### Advantageous Effects of Invention

The polyolefin resin foam particles of the present invention contain inorganic antiblocking agents but have large cell diameters. The polyolefin resin foam particles are in-mold expansion molded to give a polyolefin resin in-mold expansion molded article that has a higher surface appearance. According to the present invention, a general-purpose polyolefin resin for films can be used as the polyolefin resin to produce in-mold expansion molded articles.

### Brief Description of the Drawings

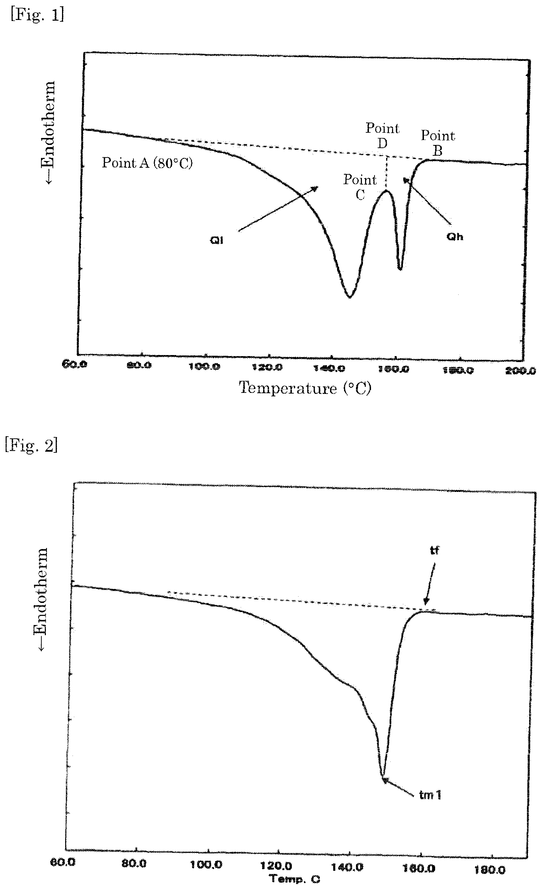

Fig. 1 is an example of a DSC curve (temperature vs. endothermic quantity) obtained by differential scanning calorimetry (DSC) when the temperature of polyolefin resin foam particles of the present invention was increased from 40°C to 220°C at a temperature increase rate of 10°C/min., where a single polypropylene resin was used as the substrate resin and no polyethylene resin was added. The DSC curve has two melting peaks and has two melting heat quantity regions of a low-temperature-side melting heat quantity (Ql) and a high-temperature-side melting heat quantity (Qh).
Fig. 2 is an example of a DSC curve obtained during the second temperature increase when the temperature of a polyolefin resin composition of the present invention was increased from 40°C to 220°C at a temperature increase rate of 10°C/min., then was decreased from 220°C to 40°C at a rate of 10°C/min., and was increased again from 40°C to 220°C at a rate of 10°C/min., where a single polypropylene resin was used as the substrate resin and no polyethylene resin was added, tm1 is the melting point. tf is the melting completion temperature and is the temperature at which the tail of the melting peak at the high temperature side returns to the base line position at the high temperature side during the second temperature increase.

### Description of Embodiments

As the substrate resin of polyolefin resin foam particles of the present invention, polyolefin resins such as polypropylene resins and polyethylene resins are usable, and these resins can be used as a mixture.

The polypropylene resin as the substrate resin used in the present invention may be a propylene homopolymer but is preferably a polypropylene random copolymer including propylene and a comonomer other than propylene. Examples of the comonomer include α-olefins with 2 or 4 to 12 carbon atoms, such as 1-butene, ethylene, isobutene, 1-pentene, 3-methyl-1-butene, 1-hexene, 4-methyl-1-pentene, 3,3-dimethyl-1-butene, 1-heptene, 3-methyl-1-hexene, 1-octene, and 1-decene. These comonomers may be used singly or in combination. In term of the foamability when polypropylene resin foam particles are prepared and an excellent surface appearance of a polypropylene resin in-mold expansion molded article to be produced, the comonomer is preferably 1-butene and/or ethylene.

In the polypropylene resin as the substrate resin of the present invention, the total content of the comonomers is preferably 0.5% by weight or more and 10% by weight or less relative to 100% by weight of the polypropylene resin. A polypropylene resin containing comonomers in a total amount of less than 0.5% by weight is more likely to have a melting point of more than 160°C, and if resulting foam particles are intended to be in-mold expansion molded, the molding pressure (water vapor heating pressure) exceeds 0.40 MPa (gauge pressure) and the molding becomes difficult in some cases. When the foam particles are, if obtained, in-mold expansion molded at a molding pressure of 0.40 MPa (gauge pressure) or less, the molding cycle is likely to be elongated. If the content of the comonomer is more than 10% by weight, the water vapor heating pressure at the time of in-mold expansion molding is reduced, but the polypropylene resin itself has a lower melting point. Thus, the molding cycle is likely to be elongated, or a resulting in-mold expansion molded article is unlikely to satisfy practical rigidity such as compressive strength. If the practical rigidity is insufficient, the foaming ratio of a molded article is required to be reduced, and such a molded article is unlikely to achieve weight reduction. For these reasons, the content of the comonomer is more preferably 1.5% by weight or more and 8% by weight or less and even more preferably 2.5% by weight or more and 6% by weight or less.

The polypropylene resin as the substrate resin used in the present invention preferably has a melt flow rate (hereinafter called "MFR") of 3 g/10 min. or more and 20 g/10 min. or less, more preferably 5 g/10 min. or more and 15 g/10 min. or less, even more preferably 6 g/10 min. or more and 12 g/10 min. or less. If the MFR is less than 3 g/10 min., a resulting in-mold expansion molded article is likely to have a poor surface appearance, and if the MFR is more than 20 g/10 min., the molding cycle is likely to be elongated. Here, the MFR of the polypropylene resin as the substrate resin in the present invention is determined by using a MFR measurement apparatus described in JIS K7210 in conditions of an orifice size of 2.0959 ± 0.005 mmϕ, an orifice length of 8.000 ± 0.025 mm, a load of 2,160 g, and a temperature of 230 ± 0.2°C.

The polypropylene resin as the substrate resin used in the present invention preferably has a melting point of 125°C or more and 160°C or less, more preferably 130°C or more and 155°C or less, and most preferably 140°C or more and 149°C or less. If the polypropylene resin has a melting point of less than 125°C, the heat resistance is likely to be insufficient. If having a melting point of more than 160°C, the polypropylene resin requires an excessively high molding heat pressure and is unlikely to be able to be molded in a typical in-mold expansion molding machine that withstands a pressure of 0.40 MPa (gauge pressure).

As the polypropylene resin used in the present invention, a single polypropylene resin may be used, or a mixture of two or more polypropylene resins may be used. The mixing method is exemplified by a method of mixing with a blender or a similar device and a method of blending by multistep polymerization at the time of polymerization.

The polymerization catalyst for polymerization of the polypropylene resin is not limited to particular catalysts, and various catalysts such as Ziegler-Natta catalysts and metallocene catalysts can be used.

When a polypropylene resin is used as the substrate resin of the polyolefin resin foam particles of the present invention, a polyethylene resin is preferably used in combination. Although the reason for this is unclear, it is supposed that two or more inorganic antiblocking agents to be added are more likely to be uniformly dispersed in the polypropylene resin in the present invention. The combination use of the polypropylene resin with the polyethylene resin allows the polyolefin resin foam particles to have uniform cell diameters and to have larger cell diameters.

The polyethylene resin used in combination with the polypropylene resin in the present invention preferably has a melting point of 105°C or more and 140°C or less, more preferably 120°C or more and 135°C or less, even more preferably more than 128°C and not more than 135°C. If the polyethylene resin has a melting point of less than 105°C, a resulting in-mold expansion molded article is likely to have low practical rigidity such as compressive strength. If the polyethylene resin has a melting point of more than 140°C, the effect of combination use of the polypropylene resin and the polyethylene resin is unlikely to be markedly achieved.

In the present invention, the polyethylene resin used in combination with the polypropylene resin as the substrate resin is not limited to particular polyethylene resins, and is exemplified by high-density polyethylene resins, medium-density polyethylene resins, low-density polyethylene resins, and linear low-density polyethylene resins. From the viewpoint of uniform cell diameters of the polyolefin resin foam particles, the polyethylene resin is preferably a high-density polyethylene resin having a density of 0.94 g/cm³ or more.

A polyethylene resin having a high molecular weight is preferred to a polyethylene wax having a low molecular weight. For example, a polyethylene resin having a melt flow rate of 0.01 g/10 min. or more and 20 g/10 min. or less is preferred.

Here, the melt flow rate of a polyethylene resin is a value determined in accordance with JIS K7210 in conditions of a load of 2,160 g and a temperature of 190 ± 0.2°C.

As the polyethylene resin used in combination with the polypropylene resin as the substrate resin in the present invention, a polyethylene resin having a melting point of 105°C or more and 140°C or less is preferably used in combination in an amount of 0.1 parts by weight or more and 15 parts by weight or less relative to 100 parts by weight of the polypropylene resin. If the polyethylene resin is used in combination in an amount of less than 0.1 parts by weight, the effect of uniformizing cell diameters is unlikely to be achieved. If the polyethylene resin is used in combination in an amount of more than 15 parts by weight, a resulting in-mold expansion molded article is likely to have lower rigidity although a polypropylene resin is mainly used.

The polyolefin resin composition used in the present invention preferably has a flexural modulus of 1,200 MPa or more and 1,700 MPa or less, more preferably 1,200 MPa or more and 1,550 MPa or less.

Typically, to produce a polyolefin resin in-mold expansion molded article by in-mold expansion molding of polyolefin resin foam particles that are prepared from a polyolefin resin composition having a high flexural modulus, a higher molding pressure is likely to be required at the time of in-mold expansion molding as polyolefin resin foam particles have smaller cell diameters. In contrast, the present invention suppresses the reduction in cell diameters of polyolefin resin foam particles, and thus enables the formation of an in-mold expansion molded article having an excellent surface appearance even at a comparatively low molding pressure at the time of in-mold expansion molding. The resulting in-mold expansion molded article has high compressive strength, for example, and thus is suitably used for bumpers that are required to have high rigidity and for returnable boxes that are required to have durability, for example. In addition, the present invention enables further weight reduction and thus is preferred.

In order to make the polyolefin resin composition have a flexural modulus of 1,200 MPa or more and 1,700 MPa or less in the present invention, a polypropylene resin having a flexural modulus of 1,200 MPa or more and 1,700 MPa or less is preferably, mainly used as the polyolefin resin that is the substrate resin. In particular, a polypropylene resin containing 1-butene as the comonomer is preferably used.

Here, the flexural modulus of a polyolefin resin composition is a value determined as follows: a polyolefin resin composition is dried at 80°C for 6 hours; then the composition is subjected to a 35 t injection molding machine at a cylinder temperature of 200°C and a mold temperature of 30°C to give a bar having a thickness of 6.4 mm (a width of 12 mm, a length of 127 mm); and the bar is subjected to the flexural test in accordance with ASTM D790 within a week to give the flexural modulus value.

As the substrate resin of the polyolefin resin foam particles of the present invention, a polyethylene resin may be used. The polyethylene resin as the substrate resin is exemplified by high-density polyethylene resins, medium-density polyethylene resins, low-density polyethylene resins, and linear low-density polyethylene resins. Of these polyethylene resins, a linear low-density polyethylene resin is more preferably used because highly foamed polyethylene resin foam particles are produced. A plurality of linear low-density polyethylene resins having different densities can be blended and used. A linear low-density polyethylene resin can be blended with one or more resins selected from the group consisting of high-density polyethylene resins, medium-density polyethylene resins, and low-density polyethylene resins, and the blend can be used.

If the polyethylene resin as described above is used as the substrate resin, a blend of a plurality of such polyethylene resins easily increases the moldable pressure range at the time of in-mold expansion molding. Thus, such a case is a more preferred embodiment in the present invention. In particular, a blend of a linear low-density polyethylene resin and a low-density polyethylene resin is more preferably used.

The linear low-density polyethylene resin used as the substrate resin in the present invention more preferably has a melting point of 115°C or more and 130°C or less, a density of 0.915 g/cm³ or more and 0.940 g/cm³ or less, and a melt flow rate of 0.1 g/10 min. or more and 5 g/10 min. or less, for example.

Here, the melt flow rate of a polyethylene resin in the present invention is a value determined in accordance with JIS K7210 at a load of 2,160 g and a temperature of 190 ± 0.2°C.

The linear low-density polyethylene resin used as the substrate resin in the present invention may contain a comonomer copolymerizable with ethylene, other than ethylene. As the comonomer copolymerizable with ethylene, an α-olefin with 3 or more and 18 or less carbon atoms can be used. Such an α-olefin is exemplified by propylene, 1-butene, 1-pentene, 1-hexene, 3,3-dimethyl-1-butene, 4-methyl-1-pentene, 4,4-dimethyl-1-pentene, and 1-octene. These comonomers may be used singly or in combination of two or more of them.

When the linear low-density polyethylene resin is a copolymer, the comonomer is preferably used in an amount of about 1% by weight or more and 12% by weight or less to be copolymerized in order to make the copolymer have a density within the range.

The low-density polyethylene resin used as the substrate resin in the present invention more preferably has a melting point of 100°C or more and 120°C or less, a density of 0.910 g/cm³ or more and 0.930 g/cm³ or less, and a MFR of 0.1 g/10 min. or more and 100 g/10 min. or less, for example.

The low-density polyethylene resin used in the present invention may contain a comonomer copolymerizable with ethylene, other than ethylene. As the comonomer copolymerizable with ethylene, an α-olefin with 3 or more and 18 or less carbon atoms can be used. Such an α-olefin is exemplified by propylene, 1-butene, 1-pentene, 1-hexene, 3,3-dimethyl-1-butene, 4-methyl-1-pentene, 4,4-dimethyl-1-pentene, and 1-octene. These comonomers may be used singly or in combination of two or more of them.

If the polyethylene resin is used as the substrate resin of the polyolefin resin foam particles of the present invention, an in-mold expansion molded article having excellent flexibility and shock absorbing characteristics is produced and thus is suitably used for shock absorbing packing materials, for example.

The two or more inorganic antiblocking agents used in the present invention are inorganic antiblocking agents commonly used in polyolefin resins for films and are inorganic substances added in order to prevent film-like products processed from a polyolefin resin from adhering to each other (to prevent blocking). Although the present invention does not relate to the technical field of film products, the inorganic substance is called "inorganic antiblocking agent" for convenience.

The present invention is accomplished, as described above, by the following findings. When a general-purpose polyolefin resin containing a single inorganic antiblocking agent is used to prepare polyolefin resin foam particles, the particles have smaller cell diameters. In contrast, by further adding another inorganic antiblocking agent, the resulting particles surprisingly have larger cell diameters.

The inorganic antiblocking agent used in the present invention is specifically exemplified by silica (silicon dioxide), silicate salts, alumina, diatomaceous earth, calcium carbonate, magnesium carbonate, calcium phosphate, feldspar, apatite, and barium sulfate. Examples of the silicate salt include talc, magnesium silicate, kaolin, halloysite, dickite, aluminum silicate, aluminosilicates, and zeolite.

In the present invention, two or more inorganic antiblocking agents are required to be selected and used. In order to be likely to increase the cell diameters, the inorganic antiblocking agents are preferably two or more inorganic antiblocking agents selected from the group consisting of silica, silicate salts, and alumina, more preferably two or more inorganic antiblocking agents selected from the group consisting of silica and silicate salts, and most preferably silica and talc.

The content of the inorganic antiblocking agents in the present invention is 0.1 parts by weight or more and 2 parts by weight or less, more preferably 1 part by weight or less, and most preferably 0.5 parts by weight or less relative to 100 parts by weight of the polyolefin resin in terms of the total amount of two or more inorganic antiblocking agents. If the total content of the two or more inorganic antiblocking agents is less than 0.03 parts by weight, the cell diameters are not inherently markedly reduced, and the effect of increasing the cell diameters, which is the advantageous effect of the present invention, is unlikely to be achieved. If the total content is more than 2 parts by weight, the effect of increasing the cell diameters is likely to be reduced.

The mixing ratio of the two or more inorganic antiblocking agents in the present invention is not limited to particular values. Specifically when two inorganic antiblocking agents are used, the agents are preferably mixed at a weight ratio of 1:10 to 10:1. If the mixing ratio is within the range, the effect of increasing the cell diameters is likely to be achieved.

In the present invention, other additives such as a coloring agent, a hydrophilic compound, an antistatic agent, a flame retardant, and an antioxidant can be used as long as the advantageous effects of the invention are not impaired.

As the coloring agent used in the present invention, carbon black, ultramarine, cyanine pigments, azo pigments, quinacridone pigments, cadmium yellow, chromium oxide, iron oxide, perylene pigments, and anthraquinone pigments can be used, for example. When carbon black is specifically added to a polyolefin resin, resulting polyolefin resin foam particles are typically, likely to have smaller cell diameters. According to the present invention, resulting polyolefin resin foam particles can be prevented from having smaller cell diameters.

The content of the carbon black in the present invention is preferably 0.1 parts by weight or more and 10 parts by weight or less, more preferably 0.5 parts by weight or more and 8 parts by weight or less, even more preferably 1 part by weight or more and 6 parts by weight or less relative to 100 parts by weight of the polyolefin resin. If the content of the carbon black is less than 0.1 parts by weight, the coloring effect is likely to be insufficient. If the content is more than 10 parts by weight, the effect of increasing the cell diameters by combination use of two or more inorganic antiblocking agents is likely to be reduced.

In the present invention, if added, a hydrophilic compound can improve the foaming ratio of polyolefin resin foam particles, and the advantageous effect of the present invention of increasing cell diameters is likely to be achieved. Such a case is thus a preferred embodiment.

The hydrophilic compound used in the present invention is specifically exemplified by water absorbable organic compounds such as glycerol, polyethylene glycol, glycerol fatty acid esters, melamine, isocyanuric acid, and melamine/isocyanuric acid condensates.

The content of the hydrophilic compound in the present invention is preferably 0.01 parts by weight or more and 5 parts by weight or less and more preferably 0.1 parts by weight or more and 2 parts by weight or less relative to 100 parts by weight of the polyolefin resin. If the content of the hydrophilic compound is less than 0.01 parts by weight, the effect of increasing the foaming ratio and the effect of increasing the cell diameters are unlikely to be achieved. If the content is more than 5 parts by weight, the hydrophilic compound is unlikely to be uniformly dispersed in the polyolefin resin.

Some of the flame retardants and the antioxidants function to reduce the cell diameters of polyolefin resin foam particles. If used, such an agent is preferably added in such a range as not to greatly impair the advantageous effects of the present invention.

Additives such as inorganic antiblocking agents, a coloring agent, a hydrophilic compound, an antistatic agent, a flame retardant, and an antioxidant may be directly added to a substrate resin of the polyolefin resin. Alternatively, such an additive may be previously added to another resin at a high concentration to prepare a master batch, and the master batch resin may be added to the polyolefin resin.

The resin used to prepare a master batch resin is preferably a polyolefin resin, and the same polyolefin resin as the substrate resin of polyolefin resin foam particles is most preferably used to prepare a master batch.

The method of producing the polyolefin resin foam particles of the present invention is exemplified by a method of first producing polyolefin resin particles including a polyolefin resin composition that contains a polyolefin resin and two or more inorganic antiblocking agents and the like.

The method of producing the polyolefin resin particles is exemplified by a method of using an extruder. Specifically, a polyolefin resin is blended with two or more inorganic antiblocking agents and with, as necessary, other additives such as a coloring agent and a hydrophilic compound; then the blend is placed in an extruder, melted and kneaded, and extruded from a die; and the extruded resin is cooled and then cut with a cutter, giving particles having an intended shape such as a column shape, an elliptical shape, a spherical shape, a cubic shape, and a rectangular parallelepiped shape, for example. Alternatively, a polyolefin resin can be placed in an extruder; then two or more inorganic antiblocking agents and, as necessary, other additives such as a coloring agent and a hydrophilic compound can be fed at a midway of the extruder; and the whole can be mixed, melted, and kneaded in the extruder.

A single particle of the polyolefin resin particles obtained as above preferably has a weight of 0.2 mg/particle or more and 10 mg/particle or less, more preferably 0.5 mg/particle or more and 5 mg/particle or less. If a single particle of the polyolefin resin particles has a weight of less than 0.2 mg/particle, the handling properties are likely to be reduced. If a single particle of the polyolefin resin particles has a weight of more than 10 mg/particle, the mold packing properties are likely to be reduced in an in-mold expansion molding step.

The polyolefin resin particles obtained as above can be used to produce the polyolefin resin foam particles of the present invention.

A preferred embodiment of producing the polyolefin resin foam particles of the present invention is exemplified by the following method of producing polyolefin resin foam particles in an aqueous dispersion system through a foaming step: in a pressure-resistant container, polyolefin resin particles are dispersed together with a foaming agent such as carbon dioxide in an aqueous dispersion medium; the dispersion liquid is heated to a temperature not lower than a softening temperature of the polyolefin resin particles and is pressurized; then the condition is maintained for a certain period of time; next the dispersion liquid in the pressure-resistant container is discharged into a region having a pressure lower than the internal pressure of the pressure-resistant container, giving polyolefin resin foam particles.

### Specifically,

(1) in a pressure-resistant container, polyolefin resin particles, an aqueous dispersion medium, as necessary, a dispersant, and other components are placed; then, the pressure-resistant container is vacuumed while the whole is stirred, as necessary; next a foaming agent at 1 MPa (gauge pressure) or more and 2 MPa or less (gauge pressure) is introduced; and the dispersion liquid is heated to a temperature not lower than a softening temperature of the polyolefin resin. By heating, the pressure in the pressure-resistant container is increased to about 2 MPa (gauge pressure) or more and 5 MPa or less (gauge pressure). As necessary, the foaming agent is further added around a foaming temperature to adjust an intended foaming pressure; the temperature is further adjusted; the condition is maintained for a certain period of time; next, the dispersion liquid is discharged into a region having a pressure lower than the internal pressure of the pressure-resistant container; and consequently, polyolefin resin foam particles can be obtained.

As another preferred embodiment, (2) in a pressure-resistant container, polyolefin resin particles, an aqueous dispersion medium, as necessary, a dispersant, and other components are placed; then, the pressure-resistant container is vacuumed, as necessary, while the whole is stirred; and a foaming agent is introduced while the dispersion liquid is heated to a temperature not lower than a softening temperature of the polyolefin resin.

As still another preferred embodiment, (3) in a pressure-resistant container, polyolefin resin particles, an aqueous dispersion medium, as necessary, a dispersant, and other components are placed; then the dispersion liquid is heated to a temperature around a foaming temperature; a foaming agent is further introduced; the temperature is adjusted to a foaming temperature; the condition is maintained for a certain period of time; the dispersion liquid is discharged into a region having a pressure lower than the internal pressure of the pressure-resistant container; and consequently polyolefin resin foam particles can also be obtained.

Before the discharging into a low pressure region, carbon dioxide, nitrogen, air, or a substance used as the foaming agent can be injected under pressure to increase the internal pressure of the pressure-resistant container, thereby adjusting the pressure release rate during foaming. In addition, also during the discharging into a low pressure region, carbon dioxide, nitrogen, air, or a substance used as the foaming agent can be introduced into the pressure-resistant container to control the pressure, thereby adjusting the foaming ratio.

The foaming ratio of the polyolefin resin foam particles in the present invention is not limited to particular values and is preferably 5 or more and 60 or less. If the polyolefin resin foam particles have a foaming ratio of less than 5, the weight reduction is likely to be insufficient. If the polyolefin resin foam particles have a foaming ratio of more than 60, the mechanical strength is likely to be impractical.

The polyolefin resin foam particles in the present invention have an average cell diameter of 100 µm or more and 400 µm or less, preferably 105 µm or more and 360 µm or less, and most preferably 110 µm or more and 330 µm or less. If the polyolefin resin foam particles have an average cell diameterof less than 100 µm, a resulting polyolefin resin in-mold expansion molded article is likely to have a poor surface appearance and to also have a lower compressive strength. If having an average cell diameter of more than 400 µm, the polyolefin resin foam particles are likely to have nonuniform cell diameters, and a resulting polyolefin resin in-mold expansion molded article is also likely to have a poor surface appearance. To produce polyolefin resin foam particles having an average cell diameter of more than 400 µm, the high-temperature heat quantity rate described later is likely to be required to be reduced, and such polyolefin resin foam particles will give a polyolefin resin in-mold expansion molded article having a lower compressive strength.

Here, the average cell diameter is a value determined by the following procedure.

The center cross section of a foam particle is observed under a microscope. In the observation photograph by the microscope, a line segment corresponding to a length of 1,000 µm is drawn except the surface layer portion. The number n of cells through which the line segment passes is counted, and the cell diameter is calculated as 1,000/n (µm).

Ten foam particles are subjected to the same operation, and the average of the calculated cell diameters is regarded as the average cell diameter of the polyolefin resin foam particles.

The average cell diameter of the polyolefin resin foam particles can be controlled by the high-temperature heat quantity rate described later, for example. If the high-temperature heat quantity rate is less than 15%, the average cell diameter is likely to be increased. If the high-temperature heat quantity rate is more than 50%, the average cell diameter is likely to be reduced. For example, when two inorganic antiblocking agents are used as described above, the average cell diameter can also be controlled by the method of changing the mixing ratio within 1:10 to 10:1 in terms of weight.

The polyolefin resin foam particles of the present invention have at least two melting peaks on the DSC curve obtained by differential scanning calorimetry (DSC) when the temperature of the polyolefin resin foam particles is increased at a temperature increase rate of 10°C/min., as shown in Fig. 1, and have at least two melting heat quantities of a low-temperature-side melting heat quantity (Ql) and a high-temperature-side melting heat quantity (Qh).

If only a single polypropylene resin or only a single polyethylene resin is used as the substrate resin of polyolefin resin foam particles, the resulting polyolefin resin foam particles are likely to have two melting peaks.

Meanwhile, in a preferred embodiment of the present invention in which a polypropylene resin is used as the substrate resin and a polyethylene resin is added to the substrate resin, the resulting polyolefin resin foam particles are likely to have three melting peaks, which depend on the amount of the polyethylene resin added.

For example, when a polyethylene resin having a melting point of 130°C is added, a melting peak derived from the polyethylene resin is likely to appear at around 130°C in addition to the two melting peaks shown in Fig. 1, and consequently a total of three melting peaks are likely to appear.

The polyolefin resin foam particles having at least two melting peaks can be easily obtained by appropriately adjusting the temperature in a pressure-resistant container at the time of foaming to a suitable value and maintaining the condition for a certain period of time in the above method of producing polyolefin resin foam particles in an aqueous dispersion system.

In other words, when the melting point of a polyolefin resin composition is tm (°C), and the melting completion temperature is tf (°C), the temperature in a pressure-resistant container at the time of foaming is typically preferably tm - 8 (°C) or more, more preferably tm - 5 (°C) or more and tm + 4 (°C) or less, and even more preferably tm - 5 (°C) or more and tm + 3 (°C) or less.

The time of maintaining the temperature in a pressure-resistant container at the time of foaming is preferably 1 minute or more and 120 minutes or less, more preferably 5 minutes or more and 60 minutes or less.

Here, the melting point tm of the polyolefin resin composition is a melting peak temperature (tm1 in Fig. 2) on a DSC curve, as shown in Fig. 2, determined with a differential scanning calorimeter DSC during the second temperature increase, when the temperature of 1 mg or more and 10 mg or less of a polyolefin resin composition is increased from 40°C to 220°C at a rate of 10°C/min., then is decreased from 220°C to 40°C at a rate of 10°C/min., and is increased again from 40°C to 220°C at a rate of 10°C/min.

The melting completion temperature tf is a temperature at which the tail of the melting peak at the high temperature side returns to the base line position at the high temperature side during the second temperature increase.

Although Fig. 2 is an example of a single melting peak, a preferred embodiment of the present invention in which a polypropylene resin is used as the substrate resin and a polyethylene resin is added to the substrate resin is likely to give two melting peaks, which depends on the amount of the polyethylene resin added.

For example, when a polyethylene resin having a melting point of 130°C is added, a melting peak derived from the polyethylene resin is likely to appear at around 130°C in addition to the single melting peak in Fig. 2, and consequently a total of two melting peaks are likely to appear.

In the present invention, if two melting peaks appear on the DSC curve of the second temperature increase, the temperature of the melting peak having a larger endothermic quantity is regarded as tm. In a preferred embodiment of the present invention in which a polypropylene resin is used as the substrate resin and a polyethylene resin is added to the substrate resin, tm is the melting point of the polypropylene resin.

The melting point of a polyolefin resin (resin containing no additives or the like) as the substrate resin of the polyolefin resin foam particles of the present invention can be determined as the melting peak temperature on the DSC curve of the second temperature increase.

In the present invention, the total melting heat quantity (Q), the low-temperature-side melting heat quantity (Ql), and the high-temperature-side melting heat quantity (Qh) of the polyolefin resin foam particles are defined as follows with reference to Fig. 1.

The total melting heat quantity that is the sum (Q = Ql + Qh) of the low-temperature-side melting heat quantity (Ql) and the high-temperature-side melting heat quantity (Qh) is a region surrounded by line segment AB and the DSC curve, where the line segment AB is between an endothermic quantity (point A) at a temperature of 80°C and an endothermic quantity (point B) at a temperature at which the high-temperature-side melting is completed on the obtained DSC curve (Fig. 1).

The low-temperature-side melting heat quantity (Ql) is a region surrounded by line segment AD, line segment CD, and the DSC curve, and the high-temperature-side melting heat quantity (Qh) is a region surrounded by line segment BD, the line segment CD, and the DSC curve, where point C is the point at which the endothermic quantity is minimum between two melting heat quantity regions of the low-temperature-side melting heat quantity and the high-temperature-side melting heat quantity on the DSC curve, and point D is the intersection of the line segment AB and a straight line that passes through the point C and is parallel with the Y axis.

If three melting peaks appear, the DSC curve has two points at which the endothermic quantity is minimum between adjacent two melting heat quantity regions. In such a case, the point at a high-temperature side of the two points is regarded as the point C.

In the polyolefin resin foam particles of the present invention, the rate of the high-temperature-side melting heat quantity (Qh) relative to the total melting heat quantity [= [Qh/(Ql + Qh)] × 100 (%)] (hereinafter, also called "high-temperature heat quantity rate") is preferably 15% or more and 50% or less, more preferably 15% or more and 40% or less, and even more preferably 20% or more and 30% or less. If having such a range, the polyolefin resin foam particles are likely to have an average cell diameter of 100 µm or more and 400 µm or less and can be in-mold expansion molded at a low molding pressure to give an in-mold expansion molded article that is satisfactory fused. The resulting in-mold expansion molded article is likely to have a high compressive strength and to have high practical rigidity.

The high-temperature heat quantity rate of the polyolefin resin foam particles can be appropriately adjusted, for example, by the holding time of the temperature in a pressure-resistant container (the holding time from that the temperature in a pressure-resistant container reaches an intended temperature until foaming), the foaming temperature (which is the temperature at the time of foaming and may be the same as or different from the above temperature in the pressure-resistant container), and the foaming pressure (the pressure at the time of foaming). Typically, a longer holding time, a lower foaming temperature, and a lower foaming pressure are likely to increase the high-temperature heat quantity rate or the high-temperature-side melting heat quantity. On this account, the holding time, the foaming temperature, and the foaming pressure are systematically changed, and such an experiment is repeated several times. As a result, the conditions achieving an intended high-temperature heat quantity rate can be easily found. The foaming pressure can be controlled by changing the amount of a foaming agent.

The pressure-resistant container for dispersing polyolefin resin particles in the present invention is not limited to particular containers, may be a container capable of withstanding the pressure in the container and the temperature in the container at the time of production of the foam particles, and is exemplified by an autoclave type pressure-resistant container.

As the aqueous dispersion medium used in the present invention, only water is preferably used, but a dispersion medium in which methanol, ethanol, ethylene glycol, glycerol, or the like is added to water is also usable. When a hydrophilic compound is contained in the present invention, the water in the aqueous dispersion medium functions as the foaming agent and contributes to an improvement of the foaming ratio.

Examples of the foaming agent used in the present invention include saturated hydrocarbons such as propane, butane, and pentane; ethers such as dimethyl ether; alcohols such as methanol and ethanol; inorganic gases such as air, nitrogen, and carbon dioxide; and water. Specifically, carbon dioxide or water is desirably used because such agents especially have a low environmental load and are not burned.

If a saturated hydrocarbon such as propane, butane, or pentane is used as the foaming agent in the method of producing polyolefin resin foam particles in an aqueous dispersion system, resulting polyolefin resin foam particles are likely to have a comparatively large average cell diameters. If an inorganic foaming agent containing carbon dioxide or water, especially an inorganic foaming agent containing carbon dioxide is used. resulting polyolefin resin foam particles are typically likely to have a smaller average cell diameter than that when a saturated hydrocarbon is used. However, the present invention enables polyolefin resin foam particles to have a larger average cell diameter even when an inorganic foaming agent containing carbon dioxide or water, which typically gives a small average cell diameter, is used as the foaming agent. Accordingly, a resulting in-mold expansion molded article is likely to have a better surface appearance, and the advantageous effects of the present invention are likely to be achieved. Thus, such an embodiment is preferred.

In the present invention, a dispersant and a dispersion assistant are preferably used in the aqueous dispersion medium in order to prevent polyolefin resin particles from adhering to each other.

Examples of the dispersant include inorganic dispersants such as tribasic calcium phosphate, tribasic magnesium phosphate, basic magnesium carbonate, calcium carbonate, barium sulfate, kaolin, talc, and clay. These dispersants may be used singly or in combination of two or more of them.

Examples of the dispersion assistant include anion surfactants such as carboxylate surfactants; sulfonate surfactants including alkyl sulfonates, n-paraffin sulfonates, alkylbenzene sulfonates, alkylnaphthalene sulfonates, and sulfosuccinates; sulfuric acid ester surfactants including sulfated oils, alkyl sulfates, alkyl ether sulfates, alkyl amidosulfates, and alkyl allyl ether sulfates; and phosphoric acid ester surfactants including alkyl phosphates and polyoxyethylene phosphates. These dispersion assistants may be used singly or in combination of two or more of them.

Specifically, at least one dispersant selected from the group consisting of tribasic calcium phosphate, tribasic magnesium phosphate, barium sulfate, and kaolin is preferably used as the dispersant, and sodium n-paraffin sulfonate is preferably used as the dispersion assistant in combination.

In the present invention, the aqueous dispersion medium is typically preferably used in an amount of 100 parts by weight or more and 500 parts by weight or less relative to 100 parts by weight of the polyolefin resin particles in order to improve the dispersivity of the polyolefin resin particles in the aqueous dispersion medium.

The amounts of the dispersant and the dispersion assistant vary with the types thereof and the type and the amount of polyolefin resin particles used. The dispersant is typically preferably used in an amount of 0.2 parts by weight or more and 3 parts by weight or less, and the dispersion assistant is typically preferably used in an amount of 0.001 parts by weight or more and 0.1 parts by weight or less, relative to 100 parts by weight of the polyolefin resin particles.

The process of giving polyolefin resin foam particles from polyolefin resin particles as above is also called "one-step foaming process", and polyolefin resin foam particles obtained through the process are also called "one-step foam particles".

One-step foam particles may have a foaming ratio of less than 10, which depends on the type of a foaming agent used for the production. In such a case, an inorganic gas (for example, air, nitrogen, or carbon dioxide) is impregnated into one-step foam particles, and an internal pressure is applied to the particles. Then, the particles are brought into contact with water vapor at a certain pressure, and consequently polyolefin resin foam particles having a higher foaming ratio than that of the one-step foam particles can be obtained.

The process of further foaming polyolefin resin foam particles to give polyolefin resin foam particles having a higher foaming ratio as above is also called "two-step foaming process". Polyolefin resin foam particles obtained through such a two-step foaming process is also called "two-step foam particles".

In the present invention, the pressure of water vapor in the two-step foaming process is preferably adjusted to 0.04 MPa (gauge pressure) or more and 0.25 MPa (gauge pressure) or less and is more preferably adjusted to 0.05 MPa (gauge pressure) or more and 0.15 MPa (gauge pressure or less in consideration of the foaming ratio of two-step foam particles.

If the pressure of water vapor in the two-step foaming process is less than 0.04 MPa (gauge pressure), the foaming ratio is unlikely to be improved. If the pressure is more than 0.25 MPa (gauge pressure), resulting two-step foam particles are likely to be fused to each other and are unlikely to be subjected to the subsequent in-mold expansion molding.

The internal pressure of air that is impregnated into one-step foam particles is desirably appropriately changed in consideration of the foaming ratio of two-step foam particles and the water vapor pressure in a two-step foaming process, and is preferably 0.2 MPa (absolute pressure) or more and 0.6 MPa (absolute pressure) or less.

If the internal pressure of air that is impregnated into one-step foam particles is less than 0.2 MPa (absolute pressure), water vapor at high pressure is required in order to improve the foaming ratio, and resulting two-step foam particles are likely to be fused. If the internal pressure of air that is impregnated into one-step foam particles is more than 0.6 MPa (absolute pressure), resulting two-step foam particles are likely to have open cells, and such particles are likely to give an in-mold expansion molded article having lower rigidity such as compressive strength.

The polyolefin resin foam particles of the present invention does not include styrene-modified polyolefin resin foam particles that are prepared through a process of impregnating styrenes into polyolefin resin particles and polymerizing the styrenes. Although the reason is unclear, the advantageous effects of the present invention are not markedly achieved on the styrene-modified polyolefin resin foam particles.

The polyolefin resin foam particles of the present invention can be subjected to a conventionally known in-mold expansion molding method to give a polyolefin resin in-mold expansion molded article.

As the in-mold expansion molding method, the following methods can be used, for example:
method (A): polyolefin resin foam particles are subjected to pressurization treatment with an inorganic gas such as air, nitrogen, and carbon dioxide, thus the inorganic gas is impregnated into the polyolefin resin foam particles, and a predetermined internal pressure is applied; and then the particles are packed in a mold and are thermally fused with water vapor;
method (B): polyolefin resin foam particles are compressed by a gas pressure and packed in a mold; and the particles are thermally fused with water vapor while the resilience of the polyolefin resin foam particles is used; and
method (C): polyolefin resin foam particles without any pretreatment are packed in a mold and are thermally fused with water vapor.

The polyolefin resin in-mold expansion molded article obtained in this manner can be used for automobile interior members, core materials for automobile bumpers, and various applications such as heat insulating materials, shock absorbing packing materials, and returnable boxes.

As described above, according to the present invention, a polyolefin resin in-mold expansion molded article having an excellent surface appearance can be produced even by using general-purpose polyolefin resins for films. In particular, even when a black polyolefin resin in-mold expansion molded article that contains carbon black and is likely to give polyolefin resin foam particles having smaller cell diameters is produced, the reduction in the cell diameters can be suppressed, and thus a resulting in-mold expansion molded article has an excellent surface appearance.

A polyolefin resin in-mold expansion molded article produced by in-mold expansion molding of polyolefin resin foam particles that are prepared from a polyolefin resin composition having a flexural modulus of 1,200 MPa or more and 1,700 MPa or less, more preferably 1,200 MPa or more and 1,550 MPa or less, is likely to require a higher molding pressure at the time of in-mold expansion molding as polyolefin resin foam particles have smaller cell diameters. In contrast, the present invention suppresses the reduction in cell diameters of polyolefin resin foam particles, and thus enables the formation of an in-mold expansion molded article having an excellent surface appearance even at a comparatively low molding pressure. The resulting in-mold expansion molded article has high compressive strength, for example, and thus is suitably used for bumpers that are required to have high rigidity and for returnable boxes that are required to have durability, for example. In addition, the present invention enables further weight reduction.

### Examples

The present invention will next be described in further detail with reference to examples and comparative examples, but the invention is not limited to these examples.

The substances used in examples and comparative examples are as shown below.
∘ Polyolefin resins
   - Polypropylene resin A [a trial product of a polypropylene resin manufacturer: random terpolymer (a 1-butene content of 3.3% by weight and an ethylene content of 1.1% by weight as comonomers, a MFR of 9 g/10 min., a melting point of 147°C, containing no inorganic antiblocking agent)]
   - Polypropylene resin B [a trial product of a polypropylene resin manufacturer: random bipolymer (an ethylene content of 3.4% by weight as a comonomer, a MFR of 7 g/10 min., a melting point of 142°C, containing no inorganic antiblocking agent)]
   - Polypropylene resin C [manufactured by Prime Polymer Co., Ltd., F-794NV (random terpolymer, containing 1-butene and ethylene as comonomers, a MFR of 6 g/10 min., a melting point of 135°C, containing 0.05% by weight of silica as an inorganic antiblocking agent)]
   - Polypropylene resin D [a trial product of a polypropylene resin manufacturer: propylene homopolymer (a MFR of 7 g/10 min., a melting point of 160°C, containing no inorganic antiblocking agent)]
   - High-density polyethylene [manufactured by Japan Polyethylene Corporation, Novatec HD HJ360 (a MFR of 5.5 g/10 min., a melting point of 132°C, a density of 0.951 g/cm³, containing no inorganic antiblocking agent)]
   - Linear low-density polyethylene [a trial product of a polyethylene resin manufacturer: (a 4-methylpentene content of 8.0% by weight as a comonomer, a MFR of 1.8 g/10 min., a melting point of 122°C, a density of 0.93 g/cm³, containing no inorganic antiblocking agent)]
o Inorganic antiblocking agents
   - Silica [manufactured by Tosoh Silica Corporation]: Nipsil E200A
   - Talc [manufactured by Hayashi-Kasei Co., Ltd.]: Talcan Powder PK-S
   - Alumina [manufactured by Nippon Light Metal Co., Ltd.]: AHP300
   - Aluminosilicate [manufactured by Mizusawa Industrial Chemicals, Ltd.]: SILTON JC
   - Kaolin [manufactured by Toshin Chemicals Co., Ltd., BASF]: ASP-170
   - Calcium carbonate [manufactured by Shiraishi Kogyo Kaisha, Ltd.: Vigot 10
o Other additives
   - Carbon black [manufactured by Mitsubishi Chemical Corporation, MCF88 (an average particle diameter of 18 nm)]
   - Glycerol: [manufactured by Wako Pure Chemical Industries, Ltd., reagent].

Evaluations in examples and comparative examples were performed by the following manners.

### <Quantitative determination of copolymer components>

To a polypropylene resin (about 1 g), 50 g of xylene was added, and the whole was heated and dissolved at 120°C. The mixture was separated by a high temperature centrifugal separator (manufactured by Kokusan Co., Ltd., H175) in conditions at 12,000 rpm for 30 minutes into an insoluble fraction and a soluble fraction. The obtained soluble fraction was cooled, and then was subjected to centrifugation (at 12,000 rpm for 30 minutes), giving an insoluble fraction. To 50 mg of the obtained insoluble fraction, 0.4 g of ortho-dichlorobenzene-d₄ was added, and the mixture was heated and dissolved at 100°C. The resulting solution was subjected to ¹³C-NMR measurement [with INOVAAS600 manufactured by VARIAN] at 98°C to quantitatively determine the copolymer contents of 1-butene and ethylene.

### <Flexural modulus of polyolefin resin composition>

A polyolefin resin composition was dried at 80°C for 6 hours, and then was subjected to a 35 t injection molding machine at a cylinder temperature of 200°C and a mold temperature of 30°C to give a bar having a thickness of 6.4 mm (a width of 12 mm, a length of 127 mm). The bar was subjected to the flexural test in accordance with ASTM D790 within a week to give the flexural modulus.

### <Measurement of melting point tm of polyolefin resin composition>

The melting point tm of a polyolefin resin composition was measured with a differential scanning calorimeter DSC [manufactured by Seiko Instruments, type DSC6200] as follows: the temperature of 5 to 6 mg of a polyolefin resin composition (polyolefin resin particles) was increased at a temperature increase rate of 10°C/min. from 40°C to 220°C to melt the resin particles, then was decreased at a temperature drop rate of 10°C/min. from 220°C to 40°C to crystallize the resin; and was further increased at a temperature increase rate of 10°C/min. from 40°C to 220°C to obtain a DSC curve. On the DSC curve obtained during the second temperature increase, the value determined as the melting peak temperature was regarded as the melting point tm (see tm1 in Fig. 2). If two melting peaks appeared on the DSC curve obtained during the second temperature increase, the temperature of the melting peak having a larger endothermic quantity was regarded as tm.

### <Foaming ratio of polyolefin resin foam particles>

About 3 g or more and 10 g or less of obtained polyolefin resin foam particles were sampled. The particles were dried at 60°C for 6 hours, then were conditioned in a room at 23°C and 50% humidity, and were weighed as w (g). Then, the volume v (cm³) was measured by a submersion method. The true specific gravity of the foam particles was calculated in accordance with ρ_{b} = w/v, and the foaming ratio was determined in accordance with K = ρᵣ/ρ_{b} where ρᵣ was the density of the polyolefin resin particles before foaming.

In each of examples and comparative examples shown below, the respective polyolefin resin particles (polypropylene resin particles) before foaming had a density ρᵣ of 0.9 g/cm³.

### <Average cell diameter of polyolefin resin foam particles>

Substantially the center of an obtained polyolefin resin foam particle was cut with careful attention so as not to break cell films of the foam particle, and the cut section was observed under a microscope [manufactured by Keyence: VHX digital microscope].

In the observation photograph by the microscope, a line segment corresponding to a length of 1,000 µm was drawn except the surface layer portion. The number n of cells through which the line segment passed was counted, and the cell diameter was calculated as 1,000/n (pm).

Ten foam particles were subjected to the same operation, and the average of the calculated cell diameters was regarded as the average cell diameter of the polyolefin resin foam particles.

### <Calculation of high-temperature heat quantity rate of polyolefin resin foam particles>

A high-temperature heat quantity rate [= [Qh/(Ql + Qh)] × 100 (%)] was determined from the DSC curve (see Fig. 1) obtained by using a differential scanning calorimeter [manufactured by Seiko Instruments, type DSC6200] when the temperature of 5 to 6 mg of polyolefin resin foam particles was increased at a temperature increase rate of 10°C/min. from 40°C to 220°C.

As shown in Fig. 1, the total melting heat quantity that is the sum (Q = Ql + Qh) of the low-temperature-side melting heat quantity (Ql) and the high-temperature-side melting heat quantity (Qh) is a region surrounded by line segment AB and the DSC curve, where the line segment AB is between an endothermic quantity (point A) at a temperature of 80°C and an endothermic quantity (point B) at a temperature at which the high-temperature-side melting is completed on the obtained DSC curve.

The low-temperature-side melting heat quantity (Ql) is a region surrounded by line segment AD, line segment CD, and the DSC curve, and the high-temperature-side melting heat quantity (Qh) is a region surrounded by line segment BD, the line segment CD, and the DSC curve, where point C is the point at which the endothermic quantity is minimum between two melting heat quantity regions of the low-temperature-side melting heat quantity and the high-temperature-side melting heat quantity on the DSC curve, and point D is the intersection of the line segment AB and a straight line that passes through the point C and is parallel with the Y axis.

If three melting peaks appear, the DSC curve has two points at which the endothermic quantity is minimum between two melting heat quantity regions. In such a case, the point at a high-temperature side of the two points was regarded as the point C.

### <Evaluation of moldability>

A polyolefin foam molding machine [manufactured by DAISEN Co., Ltd., KD-345] was used. In a mold capable of giving a plate-like in-mold expansion molded article having a length of 300 mm, a width of 400 mm, and a thickness of 50 mm in a condition of a cracking of 5 mm, polyolefin resin foam particles that had been adjusted to have such an internal air pressure of the foam particles as to be described in Table 1-1 or Table 1-2 were packed. The foam particles were compressed by 10% in the thickness direction and heat molded, giving a plate-like polyolefin resin in-mold expansion molded article having a length of 300 mm, a width of 400 mm, and a thickness of 50 mm.

The obtained polyolefin resin in-mold expansion molded article was allowed to stand for 1 hour at room temperature, and then aged and dried in a thermostatic chamber at 75°C for 3 hours. The molded article was taken out to room temperature, then was allowed to stand at room temperature for 24 hours, and was subjected to evaluations of fusion properties and surface nature.

For the in-mold expansion molding, foam particles were molded while the molding pressure (water vapor pressure) in a both-side heating step was gradually changed by 0.01 MPa, and the lowest molding pressure at which an in-mold expansion molded article evaluated as "good" or "excellent" in the fusion property evaluation described below was produced was regarded as a minimum molding pressure. An in-mold expansion molded article molded at the minimum molding pressure was subjected to the surface appearance evaluation, the measurement of molded article density, and the measurement of compressive strength at 50% strain.

### <Fusion properties>

An obtained in-mold expansion molded article was cut in the length (300 mm) direction with a cutter knife to make an incision with a depth of 5 mm in the thickness direction, and then was broken by hand. The broken face was visually observed. The ratio of broken cells inside the foam particles, which were not broken along particle interfaces, was calculated to evaluate the fusion properties on the basis of the following criteria.

Excellent: the ratio of breakage inside foam particles is 80% or more.

Good : the ratio of breakage inside foam particles is not less than 60% and less than 80%.

Failure: the ratio of breakage inside foam particles is less than 60% (fusion is insufficient, and thus the ratio of foam particle interface appearing on the broken face is more than 40%).

### <Surface appearance (flat surface portion)>

The face with a length of 300 mm and a width of 400 mm of an obtained in-mold expansion molded article was visually observed, and the surface nature was evaluated on the basis of the following criteria.

Excellent (o): a molded article has almost no intergranular space (intergranular space between polyolefin resin foam particles), inconspicuous surface unevenness, and no wrinkle or shrinkage and has an excellent surface appearance.

Good (Δ): a molded article slightly has intergranular spaces, surface unevenness, wrinkles, or shrinkage.

Failure (×): obvious intergranular spaces, surface unevenness, shrinkage, or wrinkles are observed all over the observation face.

### <Surface appearance (edge portion)>

Excellent (∘): an edge portion (a ridge line portion) at which a face intersects with another face of an in-mold expansion molded article has no unevenness derived from polyolefin resin foam particles to give a satisfactory ridge line, and the mold transferability is good. Foam particles are not peeled off even when the edge portion is rubbed with fingers.

Failure (×): an edge portion (ridge line portion) has conspicuous unevenness derived from polyolefin resin foam particles, and the mold transferability is poor. Foam particles are easily peeled off when the edge portion is rubbed with fingers.

### <Molded article density>

From substantially the center of an obtained in-mold expansion molded article, a test piece having a length of 50 mm, a width of 50 mm, and a thickness of 25 mm was cut out. Here, portions with a dimension of about 12.5 mm including the respective surface layers in the thickness direction of the in-mold expansion molded article were cut off to give the test piece having a thickness of 25 mm.

The test piece was weighed as W (g). The length, the width, and the thickness of the test piece were measured with vernier calipers, and the volume V (cm³) was calculated. The molded article density was determined in accordance with W/V. Here, the molded article density was converted into g/L as the unit.

### <Compressive strength at 50% strain>

The test piece that had been subjected to the measurement of molded article density was compressed at a rate of 10 mm/min. in accordance with NDS Z 0504 by using a tension and compression testing machine [manufactured by Minebea Co., Ltd., TG Series], and the compressive stress at 50% compression was determined.

### (Examples 1 to 20, Comparative Examples 1 to 5)

### [Preparation of polyolefin resin particles]

Polyolefin resins and additives were mixed in accordance with the formulation in Table 1-1, Table 1-2, or Table 2.

The polypropylene resin C contained silica in advance.

The resulting mixture was melted and kneaded by using a twin-screw extruder [manufactured by O. N. Machinery Co., Ltd., TEK45] at a resin temperature of 220°C. The extruded strands were cooled in a water bath having a length of 2 m and then cut to give polyolefin resin particles (1.2 mg/particle).

The obtained polyolefin resin particles were used to evaluate the flexural modulus as described above. The results are shown in Table 1-1, Table 1-2, and Table 2 as the flexural modulus of the polyolefin resin composition.

### [Preparation of one-step foam particles]

In a pressure-resistant container having a capacity of 10 L, 100 parts by weight of the obtained polyolefin resin particles, 300 parts by weight of water, 1.5 parts by weight of powdery tribasic calcium phosphate as a dispersant, 0.06 parts by weight of sodium n-paraffin sulfonate as a dispersion assistant, and 7.5 parts by weight of carbon dioxide as a foaming agent were placed. The whole was heated to the foaming temperature shown in Table 1-1, Table 1-2, or Table 2 while stirred. The conditions were maintained for 10 minutes, then carbon dioxide was further injected under pressure to adjust the foaming pressure shown in Table 1-1, Table 1-2, or Table 2, and the conditions were maintained for 30 minutes.

Then, the temperature and the pressure in the container were maintained at constant values while carbon dioxide was injected under pressure, then a valve at the lower part of the pressure-resistant container was opened to discharge the aqueous dispersion medium through an orifice plate having a pore size of 3.6 mmϕ to atmospheric pressure, giving polyolefin resin foam particles (one-step foam particles).

The obtained one-step foam particles were subjected to measurements of high-temperature heat quantity rate, average cell diameter, and foaming ratio. The results are shown in Table 1-1, Table 1-2, and Table 2.

### [Preparation of in-mold expansion molded article]

One-step foam particles were placed in a pressure-resistant container. Into the particles, pressurized air was impregnated to adjust the internal pressure of the foam particles as shown in Table 1-1, Table 1-2, or Table 2 in advance.

The polyolefin resin foam particles having an adjusted internal pressure were packed in a mold that had been clamped to leave a 5-mm clearance (a condition of a cracking of 5 mm) and was capable of yielding a plate-like in-mold expansion molded article having a length of 300 mm, a width of 400 mm, and a thickness of 50 mm. The mold was then completely clamped. The polyolefin resin foam particles were compressed by 10% in the thickness direction and heat molded, giving a plate-like polyolefin resin in-mold expansion molded article having a length of 300 mm, a width of 400 mm, and a thickness of 50 mm.

For this molding, after the polyolefin resin foam particles having an adjusted internal pressure were packed in the mold and the mold was completely clamped, air in the mold was first replaced with water vapor at 0.1 MPa (gauge pressure) (preliminary heating process: 10 seconds), and then heated water vapor at a predetermined molding pressure was used to perform a forward heating step (2 seconds), a reverse heating step (2 seconds), a both-side heating step (10 seconds), and a cooling and releasing step, giving the in-mold expansion molded article. The molding pressure (water vapor pressure) during the both-side heating step was gradually changed by 0.01 MPa to give the in-mold expansion molded article.

The results of the moldability evaluation and the measurements of the molded article density and the compressive strength at 50% strain are shown in Table 1-1, Table 1-2, and Table 2.

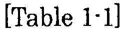

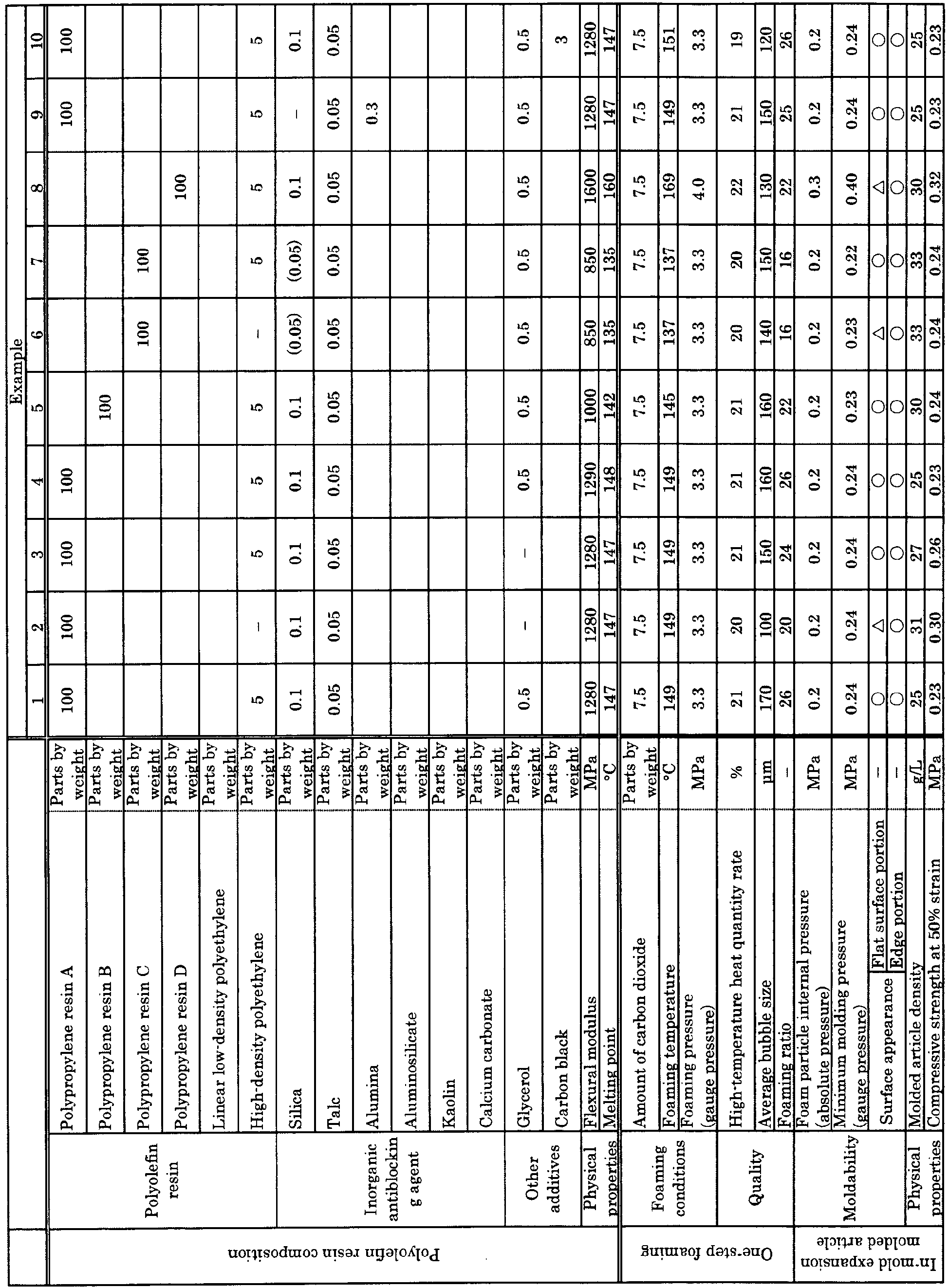

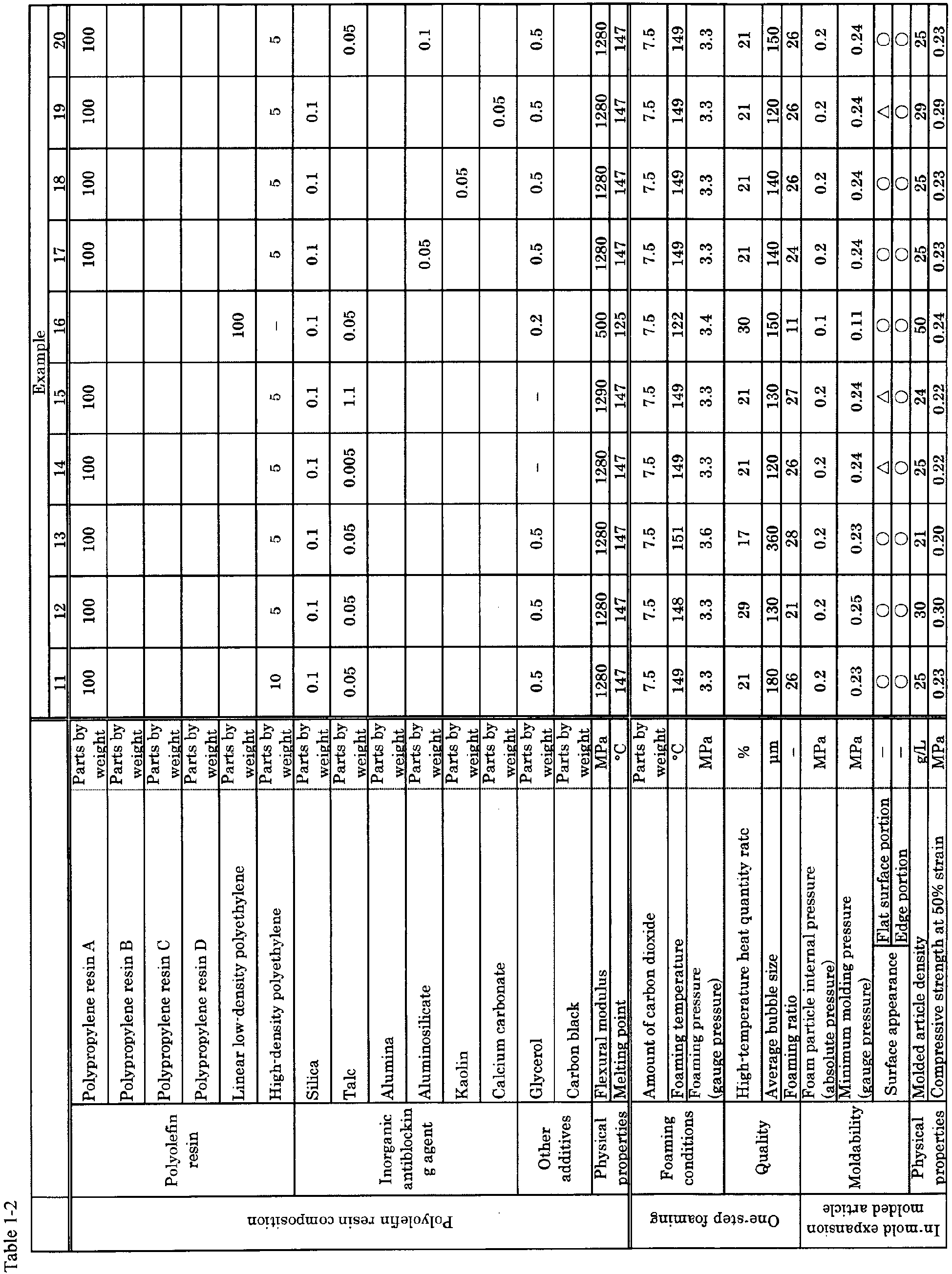

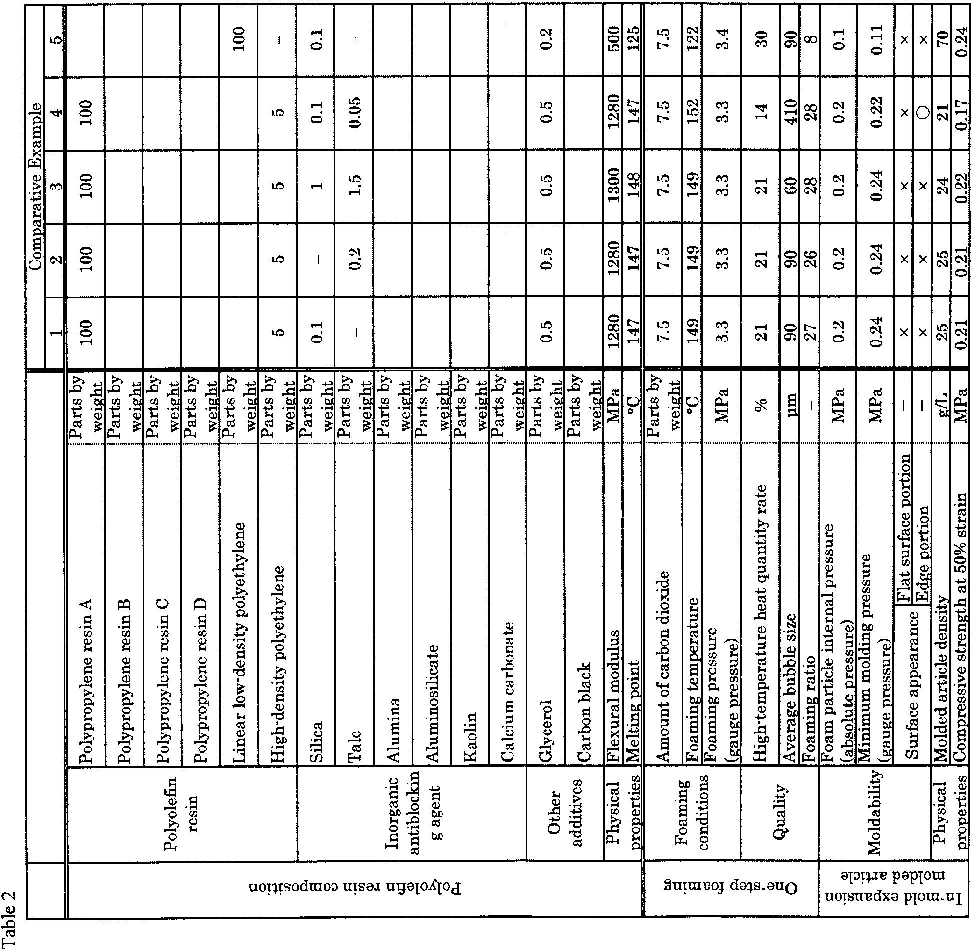

### Reference Signs List

Point A: the endothermic quantity at a temperature of 80°C on the DSC curve obtained during the first temperature increase of polyolefin resin foam particles.
Point B: the endothermic quantity at a temperature at which high-temperature-side melting is completed on the DSC curve obtained during the first temperature increase of polyolefin resin foam particles.
Point C: the point at which the endothermic quantity is minimum between two melting heat quantity regions of the low-temperature-side melting heat quantity and the high-temperature-side melting heat quantity on the DSC curve obtained during the first temperature increase of polyolefin resin foam particles.
Point D: the intersection of line segment AB and a straight line that is parallel with the Y axis and passes through the point C on the DSC curve obtained during the first temperature increase of polyolefin resin foam particles.
Qh: the high-temperature-side melting heat quantity on the DSC curve obtained during the first temperature increase of polyolefin resin foam particles.
Ql: the low-temperature-side melting heat quantity on the DSC curve obtained during the first temperature increase of polyolefin resin foam particles.
tf : the melting completion temperature on the DSC curve obtained during the second temperature increase of a polyolefin resin composition.
tm1: the melting peak temperature on the DSC curve obtained during the second temperature increase of a polyolefin resin composition.

## Claims

1. Polyolefin resin foam particles prepared by foaming polyolefin resin particles including a polyolefin resin composition, wherein the polyolefin resin composition contains two or more inorganic antiblocking agents in a total amount of 0.1 parts by weight or more and 2 parts by weight or less relative to 100 parts by weight of a polyolefin resin, and the polyolefin resin foam particles have an average cell diameter determined by the method disclosed in the description of 100 µm or more and 400 µm or less wherein the average cell diameter is determined according to a microscope photography observed in a center cross section of a foam particle.

2. The polyolefin resin foam particles according to claim 1, wherein the inorganic antiblocking agents are two or more inorganic antiblocking agents selected from the group consisting of silica, silicate salts, and alumina.

3. The polyolefin resin foam particles according to claim 1 or 2, wherein the inorganic antiblocking agents are two inorganic antiblocking agents, and the two inorganic antiblocking agents are mixed at a weight ratio of 1:10 to 10:1.

4. The polyolefin resin foam particles according to any one of claims 1 to 3, wherein the inorganic antiblocking agents are silica and talc.

5. The polyolefin resin foam particles according to any one of claims 1 to 4, wherein the polyolefin resin is a polypropylene resin.

6. The polyolefin resin foam particles according to claim 5, wherein a polyethylene resin having a melting point of 105°C or more and 140°C or less is used in combination in an amount of 0.1 parts by weight or more and 15 parts by weight or less relative to 100 parts by weight of the polypropylene resin.

7. The polyolefin resin foam particles according to claim 6, wherein the polyethylene resin is a high-density polyethylene.

8. The polyolefin resin foam particles according to any one of claims 5 to 7, wherein the polyolefin resin composition has a flexural modulus determined by the method disclosed in the description of 1,200 MPa or more and 1,700 MPa or less.

9. The polyolefin resin foam particles according to any one of claims 1 to 8, wherein carbon black is contained in an amount of 0.1 parts by weight or more and 10 parts by weight or less relative to 100 parts by weight of the polyolefin resin.

10. A polyolefin resin in-mold expansion molded article prepared by in-mold expansion molding the polyolefin resin foam particles according to any one of claims 1 to 9.

11. A method for producing polyolefin resin foam particles having an average cell diameter determined by the method disclosed in the description of 100 µm or more and 400 µm or less wherein the average cell diameter is determined according to a microscope photography observed in a center cross section of a foam particle, the method comprising:
placing polyolefin resin particles together with water and an inorganic foaming agent in a pressure-resistant container, the polyolefin resin particles including a polyolefin resin composition, the polyolefin resin composition containing two or more inorganic antiblocking agents in a total amount of 0.1 parts by weight or more and 2 parts by weight or less relative to 100 parts by weight of a polyolefin resin;
dispersing the mixture in a stirring condition and concurrently increasing a temperature and a pressure in the container; and then
discharging the dispersion liquid in the pressure-resistant container into a region having a pressure lower than the internal pressure of the pressure-resistant container, thereby foaming the polyolefin resin particles.

12. The method for producing polyolefin resin foam particles according to claim 11, wherein the increasing a temperature and a pressure is performed to give a high-temperature heat quantity rate of the polyolefin resin foam particles of 15% or more and 50% or less, and wherein the high-temperature heat quantity rate is a rate of a high-temperature-side melting heat quantity (Qh) relative to a sum of a low-temperature-side melting heat quantity (Ql) and the high-temperature-side melting heat quantity (Qh), [Qh/(Ql+Qh)]×100(%), the Qh and the Ql being determined according to a differential scanning calorimeter (DSC) curve.

13. The method for producing polyolefin resin foam particles according to claim 11 or 12, wherein the increasing a temperature in the pressure-resistant container is performed to give a temperature of tm - 5 (°C) or more and tm + 4 (°C) or less where tm (°C) is a melting point of the polyolefin resin composition.

14. The method for producing polyolefin resin foam particles according to any one of claims 11 to 13, wherein after the increasing a temperature and a pressure in the pressure-resistant container, the pressure-resistant container is maintained at the increased temperature and the increased pressure for 5 minutes or more and 60 minutes or less, and then the dispersion liquid in the pressure-resistant container is discharged into a region having a pressure lower than the internal pressure of the pressure-resistant container, thereby foaming the polyolefin resin particles.

15. The method for producing polyolefin resin foam particles according to any one of claims 11 to 14, wherein the inorganic foaming agent is carbon dioxide.

## Patentansprüche

1. Polyolefinharzschaumteilchen, hergestellt durch Schäumen von Polyolefinharzteilchen, enthaltend eine Polyolefinharzzusammensetzung, wobei
die Polyolefinharzzusammensetzung zwei oder mehr anorganische Antiblockmittel in einer Gesamtmenge von 0,1 Gewichtsteilen oder mehr und 2 Gewichtsteilen oder weniger, bezogen auf 100 Gewichtsteile eines Polyolefinharzes, enthält und
die Polyolefinharzschaumteilchen einen durchschnittlichen Zelldurchmesser, bestimmt durch das in der Beschreibung offenbarte Verfahren, von 100 µm oder mehr und 400 µm oder weniger aufweisen, wobei der durchschnittliche Zelldurchmesser gemäß einer Mikroskopfotografie, betrachtet in einem mittigen Querschnitt eines Schaumteilchens, bestimmt wird.

2. Die Polyolefinharzschaumteilchen gemäß Anspruch 1, wobei die anorganischen Antiblockmittel zwei oder mehr anorganische Antiblockmittel sind, ausgewählt aus der Gruppe bestehend aus Siliciumdioxid, Silicatsalzen und Aluminiumoxid.

3. Die Polyolefinharzschaumteilchen gemäß Anspruch 1 oder 2, wobei die anorganischen Antiblockmittel zwei anorganische Antiblockmittel sind und die zwei anorganischen Antiblockmittel in einem Gewichtsverhältnis von 1:10 bis 10:1 gemischt sind.

4. Die Polyolefinharzschaumteilchen gemäß einem der Ansprüche 1 bis 3, wobei die anorganischen Antiblockmittel Siliciumdioxid und Talk sind.

5. Die Polyolefinharzschaumteilchen gemäß einem der Ansprüche 1 bis 4, wobei das Polyolefinharz ein Polypropylenharz ist.

6. Die Polyolefinharzschaumteilchen gemäß Anspruch 5, wobei ein Polyethylenharz mit einem Schmelzpunkt von 105 °C oder mehr und 140 °C oder weniger in Kombination in einer Menge von 0,1 Gewichtsteilen oder mehr und 15 Gewichtsteilen oder weniger, bezogen auf 100 Gewichtsteile des Polypropylenharzes, verwendet wird.

7. Die Polyolefinharzschaumteilchen gemäß Anspruch 6, wobei das Polyethylenharz ein Polyethylen mit hoher Dichte ist.

8. Die Polyolefinharzschaumteilchen gemäß einem der Ansprüche 5 bis 7, wobei die Polyolefinharzzusammensetzung ein Biegemodul, bestimmt durch das in der Beschreibung offenbarte Verfahren, von 1.200 MPa oder mehr und 1.700 MPa oder weniger aufweist.

9. Die Polyolefinharzschaumteilchen gemäß einem der Ansprüche 1 bis 8, wobei Carbon Black in einer Menge von 0,1 Gewichtsteilen oder mehr und 10 Gewichtsteilen oder weniger, bezogen auf 100 Gewichtsteile des Polyolefinharzes, enthalten ist.

10. Ein in der Form expansionsgeformter Gegenstand aus Polyolefinharz, hergestellt durch Expansionsformen der Polyolefinharzschaumteilchen gemäß einem der Ansprüche 1 bis 9 in der Form.

11. Ein Verfahren zur Herstellung von Polyolefinharzschaumteilchen mit einem durchschnittlichen Zelldurchmesser, bestimmt durch das in der Beschreibung offenbarte Verfahren, von 100 µm oder mehr und 400 µm oder weniger, wobei der durchschnittliche Zelldurchmesser gemäß einer Mikroskopfotografie, betrachtet in einem mittigen Querschnitt eines Schaumteilchens, bestimmt wird, wobei das Verfahren umfasst:
Einbringen von Polyolefinharzteilchen zusammen mit Wasser und einem anorganischen Schäummittel in einen druckfesten Behälter, wobei die Polyolefinharzteilchen eine Polyolefinharzzusammensetzung enthalten, wobei die Polyolefinharzzusammensetzung zwei oder mehr anorganische Antiblockmittel in einer Gesamtmenge von 0,1 Gewichtsteilen oder mehr und 2 Gewichtsteilen oder weniger, bezogen auf 100 Gewichtsteile eines Polyolefinharzes, enthält;
Dispergieren des Gemisches in einem Rührzustand und zeitgleiches Erhöhen einer Temperatur und eines Drucks in dem Behälter; und anschließend Ableiten der dispergierten Flüssigkeit in dem druckfesten Behälter in einen Bereich, der unter einem geringeren Druck steht als der Innendruck des druckfesten Behälters, um dadurch die Polyolefinharzteilchen zu schäumen.

12. Das Verfahren zur Herstellung von Polyolefinharzschaumteilchen gemäß Anspruch 11, wobei das Erhöhen einer Temperatur und eines Drucks so durchgeführt wird, dass ein Hochtemperatur-Wärmemengenverhältnis der Polyolefinharzschaumteilchen von 15 % oder mehr und 50 % oder weniger erreicht wird, und wobei das Hochtemperatur-Wärmemengenverhältnis ein Verhältnis einer Schmelzwärmemenge auf einer Hochtemperatur-Seite (Qh) zu einer Summe einer Schmelzwärmemenge auf einer Niedrigtemperatur-Seite (Ql) und der Schmelzwärmemenge auf der Hochtemperatur-Seite (Qh) ist, [Qh / (Ql + Qh)] x 100(%), wobei Qh und Ql gemäß einer Differentialscanningkalorimeter-(DSC)-Kurve bestimmt werden.

13. Das Verfahren zur Herstellung von Polyolefinharzschaumteilchen gemäß Anspruch 11 oder 12, wobei das Erhöhen einer Temperatur im druckfesten Behälter so durchgeführt wird, dass eine Temperatur von tm - 5 (°C) oder mehr und tm + 4 (°C) oder weniger erreicht wird, wobei tm (°C) ein Schmelzpunkt der Polyolefinharzzusammensetzung ist.

14. Das Verfahren zur Herstellung von Polyolefinharzschaumteilchen gemäß einem der Ansprüche 11 bis 13, wobei, nach dem Erhöhen einer Temperatur und eines Drucks im druckfesten Behälter, der druckfeste Behälter auf der erhöhten Temperatur und dem erhöhten Druck 5 Minuten oder länger und 60 Minuten oder kürzer gehalten wird und anschließend die dispergierte Flüssigkeit in dem druckfesten Behälter in einen Bereich abgeleitet wird, der unter einem geringeren Druck steht als der Innendruck des druckfesten Behälters, wodurch die Polyolefinharzteilchen geschäumt werden.

15. Das Verfahren zur Herstellung von Polyolefinharzschaumteilchen gemäß einem der Ansprüche 11 bis 14, wobei das anorganische Schäummittel Kohlenstoffdioxid ist.

## Revendications

1. Particules de mousse de résine de polyoléfine préparées en faisant mousser des particules de résine de polyoléfine incluant une composition de résine de polyoléfine, où
la composition de résine de polyoléfine contient deux agents antiblocage inorganiques ou plus dans une quantité totale de 0,1 partie en masse ou supérieure et 2 parties en masse ou inférieure par rapport à 100 parties en masse d'une résine de polyoléfine, et
les particules de mousse de résine de polyoléfine présentent un diamètre moyen de cellule déterminé par la méthode décrite dans la description de 100 µm ou supérieur et 400 µm ou inférieur où le diamètre moyen de cellule est déterminé selon une photographie au microscope observée dans une section transversale centrale d'une particule de mousse.

2. Particules de mousse de résine de polyoléfine selon la revendication 1, où les agents antiblocage inorganiques sont deux agents antiblocage inorganiques ou plus choisis dans le groupe consistant en silice, sels de silicate, et alumine.

3. Particules de mousse de résine de polyoléfine selon la revendication 1 ou 2, où les agents antiblocage inorganiques sont deux agents antiblocage inorganiques, et les deux agents antiblocage inorganiques sont mélangés à un rapport de masse de 1:10 à 10:1.

4. Particules de mousse de résine de polyoléfine selon l'une quelconque des revendications 1 à 3, où les agents antiblocage inorganiques sont la silice et le talc.

5. Particules de mousse de résine de polyoléfine selon l'une quelconque des revendications 1 à 4, où la résine de polyoléfine est une résine de polypropylène.

6. Particules de mousse de résine de polyoléfine selon la revendication 5, où une résine de polyéthylène ayant un point de fusion de 105°C ou supérieur et 140°C ou inférieur est utilisée en combinaison dans une quantité de 0,1 partie en masse ou supérieure et 15 parties en masse ou inférieure par rapport à 100 parties en masse de la résine de polypropylène.

7. Particules de mousse de résine de polyoléfine selon la revendication 6, où la résine de polyéthylène est un polyéthylène haute densité.

8. Particules de mousse de résine de polyoléfine selon l'une quelconque des revendications 5 à 7, où la composition de résine de polyoléfine présente un module de flexion déterminé par la méthode décrite dans la description de 1 200 MPa ou supérieur et 1 700 MPa ou inférieur.

9. Particules de mousse de résine de polyoléfine selon l'une quelconque des revendications 1 à 8, où du noir de carbone est contenu dans une quantité de 0,1 partie en masse ou supérieure et 10 parties en masse ou inférieure par rapport à 100 parties en masse de la résine de polyoléfine.

10. Article moulé par expansion dans le moule de résine de polyoléfine préparé par moulage par expansion dans le moule des particules de mousse de résine de polyoléfine selon l'une quelconque des revendications 1 à 9.

11. Procédé de production de particules de mousse de résine de polyoléfine ayant un diamètre moyen de cellule déterminé par la méthode décrite dans la description de 100 µm ou supérieur et 400 µm ou inférieur où le diamètre moyen de cellule est déterminé selon une photographie au microscope observée dans une section transversale centrale d'une particule de mousse, le procédé comprenant :
le placement de particules de résine de polyoléfine avec de l'eau et un agent moussant inorganique dans un récipient résistant à la pression, les particules de résine de polyoléfine incluant une composition de résine de polyoléfine, la composition de résine de polyoléfine contenant deux agents antiblocage inorganiques ou plus dans une quantité totale de 0,1 partie en masse ou supérieure et 2 parties en masse ou inférieure par rapport à 100 parties en masse d'une résine de polyoléfine ;
la dispersion du mélange dans un état d'agitation et l'augmentation simultanée d'une température et d'une pression dans le récipient ; et puis
le déchargement du liquide de dispersion dans le récipient résistant à la pression dans une région ayant une pression inférieure à la pression interne du récipient résistant à la pression, faisant par-là mousser les particules de résine de polyoléfine.

12. Procédé pour la production de particules de mousse de résine de polyoléfine selon la revendication 11, où l'augmentation d'une température et d'une pression est réalisée pour fournir un taux de quantité de chaleur haute température des particules de mousse de résine de polyoléfine de 15 % ou supérieur et 50 % ou inférieur, et où le taux de quantité de chaleur haute température est un taux d'une quantité de chaleur de fusion côté haute température (Qh) par rapport à une somme d'une quantité de chaleur de fusion côté basse température (Ql) et de la quantité de chaleur de fusion côté haute température (Qh), [Qh/(Ql+Qh)]×100(%), la Qh et la Ql étant déterminées selon une courbe de calorimètre à balayage différentiel (DSC).

13. Procédé pour la production de particules de mousse de résine de polyoléfine selon la revendication 11 ou 12, où l'augmentation d'une température dans le récipient résistant à la pression est réalisée pour fournir une température de tm - 5(°C) ou supérieure et Tm + 4(°C) ou inférieure où tm (°C) est un point de fusion de la composition de résine de polyoléfine.

14. Procédé pour la production de particules de mousse de résine de polyoléfine selon l'une quelconque des revendications 11 à 13, où après l'augmentation d'une température et d'une pression dans le récipient résistant à la pression, le récipient résistant à la pression est maintenu à la température augmentée et la pression augmentée pendant 5 minutes ou supérieure et 60 minutes ou inférieure, et le liquide de dispersion dans le récipient résistant à la pression est ensuite déchargé dans une région ayant une pression inférieure à la pression interne du récipient résistant à la pression, faisant par-là mousser les particules de résine de polyoléfine.

15. Procédé pour la production de particules de mousse de résine de polyoléfine selon l'une quelconque des revendications 11 à 14, où l'agent moussant inorganique est le dioxyde de carbone.
